# EUROPEAN PATENT APPLICATION

(11) **EP 4 593 397 A1**
(43) Date of publication of application: **30.07.2025**
(21) Application number: 23867488.1
(22) Date of filing: 19.09.2023
(51) Int. Cl.: H04N 21/431

(54) **DISPLAY METHOD AND APPARATUS, ELECTRONIC DEVICE, AND COMPUTER READABLE MEDIUM**

(30) Priority: 20.09.2022 CN 202211146475
(71) Applicant: Beijing Zitiao Network Technology Co., Ltd., Beijing 100190 (CN)
(72) Inventor: ZHANG, Tiantian, Beijing 100028 (CN)
(74) Representative: Dentons UK and Middle East LLP
(86) International application number: PCT/CN2023/119653
(87) International publication number: WO 2024/061201

(57) **Abstract**

The present application discloses a display method and apparatus, and electronic device, and a computer readable medium. The method comprises: when a client is displaying a livestreaming video page and a first livestreaming video is displayed on the livestreaming video page, displaying an object aggregation interface on the livestreaming video page after the client receives a first operation triggered for the livestreaming video page, wherein a first candidate object corresponding to first category description information is displayed on the object aggregation interface, and the first candidate object is used for describing a first candidate livestreaming video; and then, after the client receives a trigger operation for a first control on the object aggregation interface, displaying at least one piece of second category description information on the object aggregation interface, so that a user views livestreaming videos under a plurality of categories by means of the object aggregation interface. Therefore, the livestreaming viewing requirement of the user can be better satisfied, and the livestreaming video viewing experience of the user can be effectively improved.

## Description

The present disclosure claims priority to Chinese Patent Application No. 202211146475.2, filed with the China National Intellectual Property Administration on September 20, 2022, and entitled "DISPLAY METHOD AND APPARATUS, ELECTRONIC DEVICE, AND COMPUTER READABLE MEDIUM", which is incorporated herein by reference in its entirety.

### TECHNICAL FIELD

The present disclosure relates to the field of Internet technologies, and in particular, to a display method and apparatus, an electronic device, and a computer readable medium.

### BACKGROUND

Live streaming is an information network publishing manner that synchronously manufactures and publishes information with occurrence and development processes of events on the spot, and that has a bidirectional flow process.

In some scenarios, for a particular user, when the user is watching a live streaming video in a particular live streaming room, the user may want to view a live streaming video in another live streaming room.

However, how to view a live streaming video of another live streaming room is a technical problem that urgently needs to be resolved.

### SUMMARY

The present disclosure provides a display method and apparatus, an electronic device, and a computer readable medium.

In order to achieve the above-mentioned purpose, the technical solution provided by the present disclosure is as follows:

The present disclosure provides a display method, which includes:
displaying a live streaming video page;
displaying an object aggregation interface on the live streaming video page in response to a first operation triggered for the live streaming video page, wherein at least one first candidate object corresponding to first category description information is displayed on the object aggregation interface, the first candidate object is used to describe a first candidate live streaming video, a first control is further displayed on the object aggregation interface, and the first category description information is displayed on the first control; and
displaying at least one piece of second category description information on the object aggregation interface in response to a trigger operation for the first control.

In a possible implementation, after the displaying at least one piece of second category description information on the object aggregation interface, the method further comprises:
displaying at least one second candidate object corresponding to target category description information on the object aggregation interface in response to a trigger operation for the target category description information in the at least one piece of second category description information, wherein the second candidate object is used to describe a second candidate live streaming video.

In a possible implementation, a first live streaming video is displayed on the live streaming video page; and
the displaying at least one second candidate object corresponding to target category description information on the object aggregation interface in response to a trigger operation for the target category description information in the at least one piece of second category description information comprises:
switching the at least one piece of second category description information displayed on the object aggregation interface to the at least one second candidate object corresponding to the target category description information in response to the trigger operation for the target category description information in the at least one piece of second category description information, and switching the first live streaming video played in the live streaming video page to a second live streaming video corresponding to the target category description information.

In a possible implementation, the second candidate live streaming video corresponding to the at least one second candidate object comprises the second live streaming video; and
the at least one second candidate object is displayed in a first arrangement order on the object aggregation interface, wherein the second candidate object corresponding to the second live streaming video corresponds to the first one in the first arrangement order.

In a possible implementation, the displaying at least one second candidate object corresponding to target category description information on the object aggregation interface in response to a trigger operation for the target category description information in the at least one piece of second category description information comprises:
switching the at least one piece of second category description information displayed on the object aggregation interface to the at least one second candidate object corresponding to the target category description information in response to the trigger operation for the target category description information in the at least one piece of second category description information, and switching the first category description information displayed on the first control in the object aggregation interface to the target category description information.

In a possible implementation, after the switching the first category description information displayed on the first control in the object aggregation interface to the target category description information, the method further comprises:
displaying the first category description information, and other information in the at least one piece of second category description information except the target category description information on the object aggregation interface in response to the trigger operation for the first control.

In a possible implementation, the first category description information, and the other information in the at least one piece of second category description information except the target category description information are displayed on the object aggregation interface in a second arrangement order, wherein the first category description information corresponds to the first one in the second arrangement order.

In a possible implementation, the displaying at least one piece of second category description information on the object aggregation interface comprises:
switching the at least one first candidate object on the object aggregation interface to the at least one piece of second category description information; and
after the switching the at least one first candidate object on the object aggregation interface to the at least one piece of second category description information, the method further comprises:
switching the at least one piece of second category description information on the object aggregation interface to the at least one first candidate object in response to the trigger operation for the first control.

In a possible implementation, the displaying at least one piece of second category description information on the object aggregation interface in response to a trigger operation for the first control comprises:
displaying the at least one piece of second category description information in a first area of the object aggregation interface in response to the trigger operation for the first control, and displaying a search control and/or a history browse control in a second area of the object aggregation interface.

In a possible implementation, the method comprises at least one of the following:
vertically displaying the at least one piece of second category description information on the object aggregation interface;
vertically displaying the at least one first candidate object on the object aggregation interface; and
vertically displaying the at least one second candidate object on the object aggregation interface.

The present disclosure further provides a display apparatus, comprising:
a first display unit, configured to display a live streaming video page;
a second display unit, configured to display an object aggregation interface on the live streaming video page in response to a first operation triggered for the live streaming video page, wherein at least one first candidate object corresponding to first category description information is displayed on the object aggregation interface, the first candidate object is used to describe a first candidate live streaming video, a first control is further displayed on the object aggregation interface, and the first category description information is displayed on the first control; and
a third display unit, configured to display at least one piece of second category description information on the object aggregation interface in response to a trigger operation for the first control.

The present disclosure further provides an electronic device, comprising a processor and a memory, wherein
the memory is configured to store an instruction or a computer program; and
the processor is configured to execute the instruction or the computer program in the memory, so that the electronic device performs the display method provided by the present disclosure.

The present disclosure further provides a computer-readable medium, wherein an instruction or a computer program is stored in the computer-readable medium, and when the instruction or the computer program is executed on a device, the device is enabled to perform the display method provided by the present disclosure.

The present disclosure further provides a computer program product, comprising a computer program carried on a non-transient computer-readable medium, wherein the computer program comprises a program code for performing the display method provided by the present disclosure.

### BRIEF DESCRIPTION OF DRAWINGS

In order to clearly illustrate the technical solution of the embodiment of the present disclosure or the prior art, the drawings of the embodiments or the prior art will be briefly described in the following; it is obvious that the described drawings are only related to some embodiments of the present disclosure. For an ordinary skilled in the art, other drawings can be obtained according to these drawings without creative work.
Fig. 1 is a flowchart of a display method according to an embodiment of the present disclosure;
Fig. 2 is a schematic diagram of a live streaming video page according to an embodiment of the present disclosure;
Fig. 3 is a schematic diagram of a live streaming video page according to an embodiment of the present disclosure;
Fig. 4 is a schematic diagram of a live streaming video page according to an embodiment of the present disclosure;
Fig. 5 is a schematic diagram of a live streaming video page according to an embodiment of the present disclosure;
Fig. 6 is a schematic diagram of a live streaming video page according to an embodiment of the present disclosure;
Fig. 7 is a schematic diagram of a live streaming video page according to an embodiment of the present disclosure;
Fig. 8 is a schematic diagram of a live streaming video page according to an embodiment of the present disclosure;
Fig. 9 is a schematic diagram of a live streaming video page according to an embodiment of the present disclosure;
Fig. 10 is a schematic diagram of a live streaming video page according to an embodiment of the present disclosure;
Fig. 11 is a schematic structural diagram of a display apparatus according to an embodiment of the present disclosure; and
Fig. 12 is a schematic structural diagram of an electronic device according to an embodiment of the present disclosure.

### DETAILED DESCRIPTION

To resolve the technical problem shown in the part of Background, embodiments of the present disclosure provide a display method. The method includes: for a client used by a particular user, when the client is displaying a live streaming video page and a first live streaming video is displayed on the live streaming video page, after the client receives a first operation (for example, sliding leftward) triggered for the live streaming video page, an object aggregation interface is displayed on the live streaming video page. In addition, first candidate objects corresponding to first category description information is displayed on the object aggregation interface, so that these first candidate objects are used to describe some first candidate live streaming videos; then, after the client receives a trigger operation for a first control on the object aggregation interface, at least one piece of second category description information is displayed on the object aggregation interface, so that the user can view a live streaming video under another category by means of the second category description information, so as to view live streaming videos under a plurality of categories by means of the object aggregation interface, to better meet the live streaming viewing requirement of the user, thereby further effectively improving the live streaming video viewing experience of the user.

In addition, embodiments of the present disclosure do not limit an execution body for the foregoing display method. For example, the display method provided in embodiments of the present disclosure may be performed by an electronic device. The electronic device includes but is not limited to a smartphone, a tablet computer, a notebook computer, a personal digital assistant (personal digital assistant, PDA), and the like.

To enable a person skilled in the art to better understand solutions of the present disclosure, the following clearly and completely describes the technical solutions in embodiments of the present disclosure with reference to the accompanying drawings in embodiments of the present disclosure. It is clear that the described embodiments are some but not all of embodiments of the present disclosure. All other embodiments obtained by a person of ordinary skill in the art based on the embodiments of the present disclosure without creative efforts shall fall within the protection scope of the present disclosure.

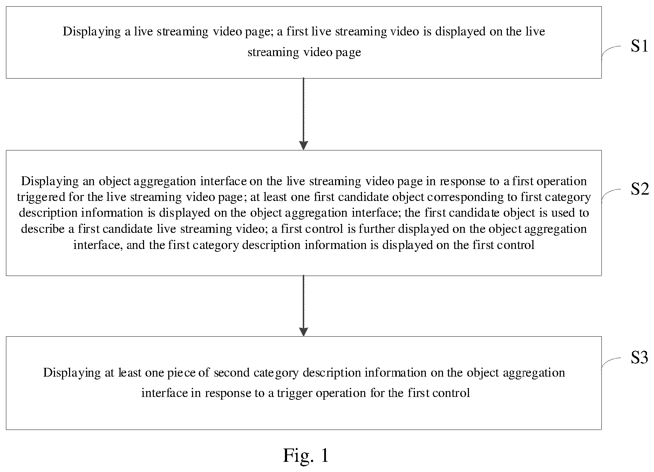

To better understand the technical solutions provided in the present disclosure, the following first describes, with reference to some accompanying drawings, a display method provided in the present disclosure. As shown in Fig. 1, the display method provided in this embodiment of the present disclosure includes the following steps S1 to S3. Fig. 1 is a flowchart of a display method according to an embodiment of the present disclosure.

S1: Displaying a live streaming video page; a first live streaming video is displayed on the live streaming video page.

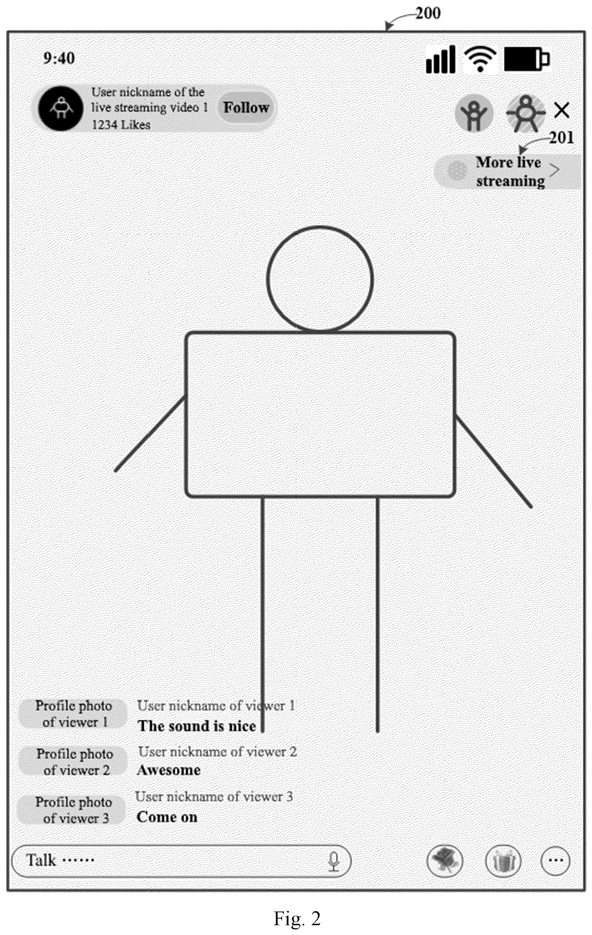

The live streaming video page is used to display a live streaming status of a particular live streaming room (for example, live streaming video data, comment information posted to the live streaming video room, or the like). In addition, the live streaming video page is not limited in this embodiment of the present disclosure, for example, it may be a page 200 shown in Fig. 2.

In addition, the first live streaming video is live streaming video data of a first live streaming room. In view of this, when the first live streaming video is being displayed on the foregoing live streaming video page, the live streaming video page may be used to display a live streaming status of the first live streaming room (for example, live streaming video data, comment information posted to the live streaming video room, or the like).

Based on the related content of the foregoing S1, it can be learned that, for a client used by a particular user, when the client is displaying a live streaming video page, and the first live streaming video is being displayed on the live streaming video page, the client may display the live streaming status of the first live streaming room to the user, so that the user can learn content related to the first live streaming room by means of the live streaming video page (for example, live streaming video data, comment information posted to the live streaming room, a nickname of the live streaming room, or the like). In this way, the user's viewing requirements for the first live streaming room can satisfied as much as possible.

S2: Displaying an object aggregation interface on the live streaming video page in response to a first operation triggered for the live streaming video page; at least one first candidate object corresponding to first category description information is displayed on the object aggregation interface; the first candidate object is used to describe a first candidate live streaming video; a first control is further displayed on the object aggregation interface, and the first category description information is displayed on the first control.

The first operation is used to trigger a recommendation display procedure for a live streaming video in another live streaming room, and the first operation is not limited in this embodiment of the present disclosure. For ease of description, description is provided below with reference to two examples.

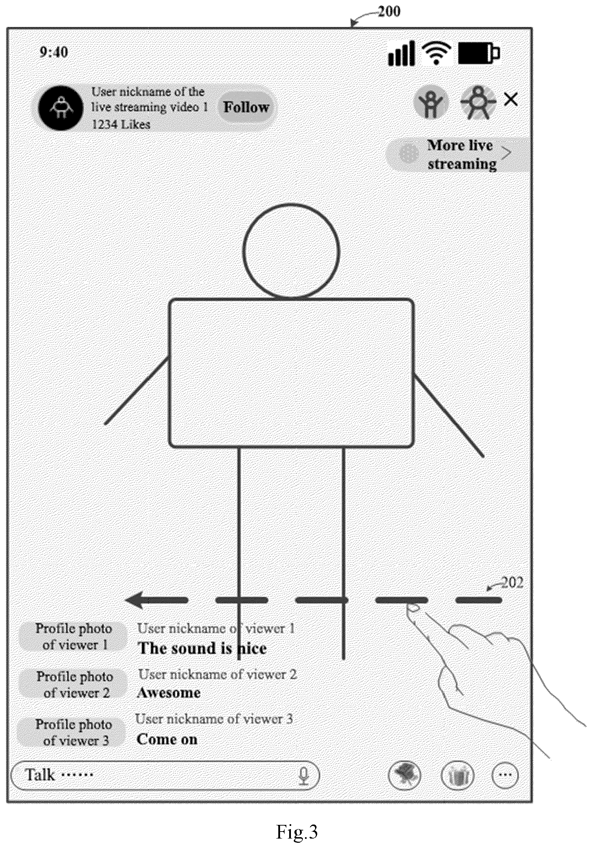

Example 1: In some cases, a particular gesture may be used to trigger the recommendation display procedure for the live streaming video in another live streaming room. Based on this, this embodiment of the present disclosure provides a possible implementation of the foregoing first operation. In this implementation, the first operation may be specifically an operation of sliding in a first direction on the foregoing live streaming video page. The first direction may be preset, for example, may be a direction shown by a dashed line 202 in Fig. 3.

In view of this, in some application scenarios, for a client used by a particular user, when the client is displaying the live streaming video page, and the first live streaming video is being displayed on the live streaming video page, if the client receives the operation of sliding in the first direction on the live streaming video page (for example, an operation of sliding leftward shown by the dashed line 202 in Fig. 3), it may be determined that the user wants to view another live streaming video other than the first live streaming video. Therefore, the client may display the object aggregation interface on the live streaming video page, so that the object aggregation interface can recommend some other live streaming videos to the user, and the user can then view other live streaming videos by using the object aggregation interface. It should be noted that, for related content of the object aggregation interface, please refer to the following.

Example 2: In some cases, operation information for a particular control may also be used to trigger a recommendation display procedure for live streaming video data of another live streaming room. Based on this, this embodiment of the present disclosure provides a possible implementation of the foregoing first operation. In this implementation, when a second control is displayed on the foregoing live streaming video page, the first operation may be specifically a trigger operation (for example, a tap operation) for the second control in the foregoing live streaming video page.

The second control is used to trigger a recommendation display procedure for live streaming video data in another live streaming room, and the second control is not limited in this embodiment of the present disclosure, for example, may be a control 201 shown in Fig. 2.

In addition, a position of the foregoing second control in the foregoing live streaming video page is not limited in this embodiment of the present disclosure. For example, in a possible implementation, a distance between a right boundary line of an area in which the second control is located on the live streaming video page (for example, an area in which the control 201 is located in Fig. 2) and a right boundary line of the live streaming video page does not exceed a second distance threshold. The second distance threshold may be preset, and the second distance threshold is a relatively small value (for example, the second distance threshold may be 0).

Based on the content of the foregoing three paragraphs, it can be learned that, in some application scenarios, for a client used by a particular user, when the client is displaying the live streaming video page, and the first live streaming video is being displayed on the live streaming video page, after the client receives a trigger operation (for example, a tap operation) for the second control in the live streaming video page, it may be determined that the user wants to view another live streaming video other than the first live streaming video. Therefore, the client may display the object aggregation interface on the live streaming video page, so that the object aggregation interface can recommend some other live streaming videos to the user, and the user can then view other live streaming videos by using the object aggregation interface. It should be noted that, for related content of the object aggregation interface, please refer to the following.

Based on the related content of the foregoing first operation, it can be learned that, in some application scenarios, the first operation may be a particular gesture (for example, a gesture of sliding leftward as shown by the dashed line in Fig. 3) triggered for the foregoing live streaming video page, or a tap operation triggered for a particular control (for example, the control 201 shown in Fig. 2) in the live streaming video page, so as to implement diversity of the first operation, thereby improving diversity of manners of triggering the recommendation display procedure for the live streaming video data in another live streaming room, and further better meeting operational requirements of different users, thus better improving the live streaming video viewing experience of the user.

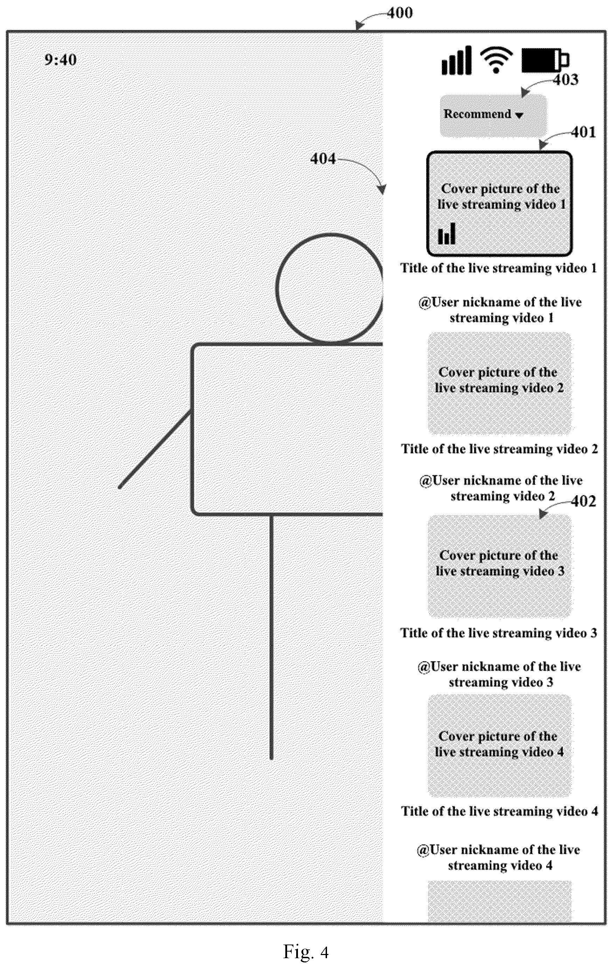

The foregoing "object aggregation interface" is used to recommend a plurality of live streaming videos to the user and the object aggregation interface is not limited in this embodiment of the present disclosure, for example, may be an interface 404 shown in Fig. 4.

In addition, content aggregated and displayed by the foregoing object aggregation interface is not limited in this embodiment of the present disclosure. For example, in a possible implementation, at least one first candidate object may be aggregated and displayed on the object aggregation interface. The first candidate object is used to describe a first candidate live streaming video. The first candidate live streaming video is a live streaming video recommended to the user when the user is watching the first live streaming video. For example, the first candidate live streaming video may be a live streaming video 1, a live streaming video 2, a live streaming video 3, or a live streaming video 4 involved in Fig. 4.

In view of this, when N first candidate objects are aggregated and displayed on the foregoing object aggregation interface, if there is a correspondence between the n^{th} first candidate object and the n^{th} first candidate live streaming video, the n^{th} first candidate object may be used to describe the n^{th} first candidate live streaming video, so that the user can view the n^{th} first candidate live streaming video by means of the n^{th} first candidate object displayed on the object aggregation interface, wherein, n is a positive integer, n≤N, and N is a positive integer. N represents the number of objects in the foregoing "at least one first candidate object".

In addition, an implementation of the foregoing n^{th} first candidate object is not limited in this embodiment of the present disclosure. For example, in a possible implementation, the n^{th} first candidate object may be image data or a video clip determined from the first candidate live streaming video (that is, the n^{th} first candidate live streaming video mentioned above) corresponding to the n^{th} first candidate object, so that the n^{th} first candidate object can indicate all or some information carried in the n^{th} first candidate live streaming video.

In another possible implementation, the foregoing n^{th} first candidate object may be determined based on related information of the first candidate live streaming video (that is, the foregoing n^{th} first candidate live streaming video) corresponding to the n^{th} first candidate object, for example, a user nickname, a user profile photo, a video title or the like corresponding to the n^{th} first candidate live streaming video.

In view of this, in some application scenarios, the n^{th} first candidate object may include at least one selected from the group consisting of live streaming room image data corresponding to the n^{th} first candidate live streaming video, and live streaming room description information corresponding to the n^{th} first candidate live streaming video. The live streaming room image data is image data related to a live streaming room to which the n^{th} first candidate live streaming video belongs, and is not limited in this embodiment of the present disclosure. For example, the live streaming room image data may be a cover picture (for example, image data shown in an area 401 in Fig. 4) uploaded for the live streaming room, an account profile photo corresponding to the live streaming room, or a particular frame of image data or a particular video clip extracted from the n^{th} first candidate live streaming video. The live streaming room description information is used to describe a live streaming room to which the n^{th} first candidate live streaming video belongs. In addition, the live streaming room description information is not limited in this embodiment of the present disclosure, and may include, for example, at least one selected from the group consisting of live streaming room identifier information and a live streaming video title. The live streaming room identifier information is related information used to identify the live streaming room (for example, an account profile photo corresponding to the live streaming room, an account nickname corresponding to the live streaming room, and other information). The account nickname corresponding to the live streaming room is a user nickname set for the live streaming room to which the n^{th} first candidate live streaming video belongs, for example, "a user nickname of the live streaming video 1" shown in Fig. 4. The live streaming video title is a title set for the n^{th} first candidate live streaming video, for example, "a title of the live streaming video 1" shown in Fig. 4. Wherein, n is a positive integer, n≤N, and N is a positive integer.

It should be noted that, for a live streaming video k shown in Fig. 4, a cover picture of the live streaming video k is a cover picture pre-uploaded for a live streaming room to which the live streaming video k belongs. A title of the live streaming video k is a title set for the live streaming video k. A user nickname of the live streaming video k is a user nickname of the live streaming room to which the live streaming video k belongs. Wherein, k is 1, 2, 3, or 4.

In addition, the first candidate live streaming video corresponding to the foregoing at least one first candidate object is not limited in this embodiment of the present disclosure. For example, in some application scenarios, when the first live streaming video is being displayed on the live streaming video page, respective first candidate live streaming video corresponding to the first candidate objects may be a live streaming video different from the first live streaming video, so that the user can view some other live streaming videos other than the first live streaming video by means of these first candidate objects.

In addition, a display manner of the foregoing at least one first candidate object on the foregoing object aggregation interface is not limited in this embodiment of the present disclosure. For example, these first candidate objects may be vertically displayed on the object aggregation interface (for example, a vertical display manner shown in Fig. 4), to ensure that these first candidate objects can better adapt to a size requirement of the object aggregation interface (for example, requirements of a small width or a large height, or the like).

Actually, in some cases, the user may not only want to switch watching between other live streaming videos expect the first live streaming video, and may also want to switch watching between the first live streaming video and the other live streaming videos expect the first live streaming video. Therefore, to better meet the live streaming video viewing requirement of the user, this embodiment of the present disclosure further provides a possible implementation of the foregoing "at least one first candidate object". In this implementation, the at least one first candidate object may not only include the first candidate object corresponding to other live streaming videos other than the first live streaming video, and may also include a second target object corresponding to the first live streaming video, so that the second target object is used to describe the first live streaming video. In this way, the at least one first candidate object can provide related information of the first live streaming video and the other live streaming videos other than the first live streaming video to the user, so that the user can achieve the object of arbitrarily switching between the first live streaming video and the other live streaming videos by means of these first candidate objects, to further better meet user experience. The second target object is the first candidate object corresponding to the first live streaming video, and the second target object is used to describe the first live streaming video.

In view of this, in a possible implementation, when the foregoing at least one first candidate object further includes the second target object corresponding to the foregoing first live streaming video, the first candidate live streaming video corresponding to the at least one first candidate object may include not only other live streaming videos other than the first live streaming video, but also the first live streaming video. For example, as shown in Fig. 4, when the first live streaming video is the live streaming video 1 shown in Fig. 4, and the foregoing object aggregation interface is the interface 404 shown in Fig. 4, the user may not only view the other live streaming videos (for example, the live streaming video 2, the live streaming video 3, or the live streaming video 4 shown in Fig. 4) other than the first live streaming video by means of the object aggregation interface, and may also return to continue viewing the first live streaming video (for example, the live streaming video 1 shown in Fig. 4) by means of the object aggregation interface.

In addition, the display manner of the foregoing object aggregation interface for the foregoing at least one first candidate object is not limited in this embodiment of the present disclosure. For example, a related or any future manner of displaying a plurality of objects on the interface may be used.

Actually, in some application scenarios, to highlight, to the greatest extent, video data (for example, the live streaming video 1 shown in Fig. 4) currently displayed on the foregoing live streaming video page, this embodiment of the present disclosure further provides a possible implementation of the foregoing "object aggregation interface". In this implementation, when the first live streaming video (for example, the live streaming video 1 shown in Fig. 4) is being displayed on the live streaming video page, the object aggregation interface is displayed on the live streaming video page, and the at least one first candidate object displayed on the object aggregation interface includes the second target object corresponding to the first live streaming video, e.g., an object consisting of "cover picture of the live streaming video 1" , "title of the live streaming video 1" and "@the user nickname of the live streaming video 1" in Fig. 4, the at least one first candidate object may be displayed on the object aggregation interface in a third arrangement order, and the second target object corresponds to the first one in the third arrangement order, wherein the third arrangement order may be preset.

In view of this, for a client used by a particular user, when the client is displaying the live streaming video page, and the first live streaming video is being displayed on the live streaming video page, the client may display the object aggregation interface on the live streaming video page after the client receives the first operation (for example, the operation of sliding leftward shown in Fig. 3 or a tap operation for the control 201 in Fig. 2) triggered for the live streaming video page, so that the object aggregation interface can display the first candidate objects corresponding to the at least one first candidate live streaming video in the third arrangement order. Since the second target object corresponding to the first live streaming video corresponds to the first one in the third arrangement order, an information recommendation position of the first live streaming video on the object aggregation interface is more prominent, so that the user can quickly locate the second target object corresponding to the first live streaming video from the object aggregation interface later. In this way, time for the user to search for related information of the first live streaming video can be effectively reduced, thereby improving user experience.

Actually, in some application scenarios. to reduce a blocking range of the foregoing object aggregation interface for the foregoing live streaming video page as much as possible, this embodiment of the present disclosure further provides another possible implementation of the foregoing "object aggregation interface". In this implementation, when the object aggregation interface is being displayed on the live streaming video page, the foregoing at least one first candidate object may be displayed on the object aggregation interface in a single column (for example, the single column manner shown in Fig. 4), so that the object aggregation interface can display these first candidate objects in minimum space, so as to effectively reduce the area occupied by the object aggregation interface in the foregoing live streaming video page, thereby further effectively alleviating information blocking impact caused by the object aggregation interface to the live streaming video page. In this way, viewing experience of the user for the live streaming video page can be effectively improved.

In view of this, for a client used by a particular user, when the client is displaying the live streaming video page, after the client receives the first operation triggered for the live streaming video page, the client may display the object aggregation interface (for example, the interface 404 shown in Fig. 4) on the live streaming video page, so that the object aggregation interface can show, in a single column, the first candidate objects corresponding to the at least one first candidate live streaming video arranged in the third arrangement order, so that the object aggregation interface can display related information (for example, the cover picture, the title, and the user nickname) of these first candidate live streaming videos in minimum space, so as to effectively alleviate information blocking impact caused by the object aggregation interface to the live streaming video page, thereby effectively improving viewing experience of the user for the live streaming video page.

Actually, for the user, after the user performs a trigger operation for a particular control, the user usually habitually search, around the control, for related content that the control controls to display, for example, the interface. Therefore, to better utilize the user habit, this embodiment of the present disclosure further provides another possible implementation of the foregoing "object aggregation interface". In this implementation, when the foregoing live streaming video page includes the second control, and the second control can trigger a display process for the object aggregation interface, if the distance between the right boundary line of the area in which the foregoing second control is located on the live streaming video page and the right boundary line of the live streaming video page does not exceed the second distance threshold, it may be determined that the second control is quite close to the right boundary line of the live streaming video page, so as to determine that a focus area of the user is quite close to the right boundary line of the live streaming video page when the user triggers a particular operation for the second control. Therefore, to better adapt to the focus area of the user, the right boundary of the area in which the object aggregation interface (for example, the interface 404 shown in Fig. 4) is located on the live streaming video page may overlap the right boundary of the live streaming video page, so that the object aggregation interface can directly appear within the focus area of the user, thereby effectively improving the user experience.

In view of this, for a client used by a particular user, when the client is displaying the live streaming video page (for example, the page 200 shown in Fig. 2), and the second control (for example, the control 201 shown in Fig. 2) is displayed within a right boundary of the live streaming video page, after the client receives the first operation triggered for the live streaming video page, the client may display the object aggregation interface (for example, the interface 404 shown in Fig. 4) within the right boundary of the live streaming video page, so that the displaying area of the object aggregation interface is relatively close to the displaying area of the first control, so as to effectively meet the information viewing requirement of the user that the focus area does not change, thereby facilitating to improve user experience.

Actually, to better improve user experience, this embodiment of the present disclosure further provides another possible implementation of the foregoing "object aggregation interface". In this implementation, a ratio of an interface size of the object aggregation interface to a page size of the foregoing live streaming video page does not exceed a preset ratio threshold. The interface size indicates an interface size of the object aggregation interface. The page size indicates a page size of the live streaming video page. The preset ratio threshold may be preset based on an application scenario, to ensure that the object aggregation interface can display these first candidate live streaming videos in minimum space. For ease of understanding the preset ratio threshold, the following provides description with reference to examples.

For example, when the interface size of the object aggregation interface includes a length of the object aggregation interface and a width of the object aggregation interface, and the page size of the live streaming video page includes a length of the live streaming video page and a width of the live streaming video page, the preset ratio threshold may be specifically that: a ratio of the length of the object aggregation interface to the length of the live streaming video page does not exceed 1, and a ratio of the width of the object aggregation interface to the width of the live streaming video page does not exceed 1/4.

Based on content of the foregoing two paragraphs, it can be learned that, when the client is displaying the live streaming video page (for example, the page 200 shown in Fig. 2), after the client receives the first operation triggered for the live streaming video page, the client may display the object aggregation interface (for example, the interface 404 shown in Fig. 4) on the live streaming video page according to the preset ratio threshold, so that a ratio of the interface size of the object aggregation interface to the page size of the foregoing live streaming video page does not exceed the preset ratio threshold, and thus the object aggregation interface can display these first candidate live streaming videos in minimum space, so as to effectively reduce the area occupied by the object aggregation interface on the foregoing live streaming video page, and further effectively alleviate information blocking impact caused by the object aggregation interface to the live streaming video page, thereby effectively improving viewing experience of the user for the live streaming video page.

In addition, the displaying manner of the foregoing "object aggregation interface" for the at least one first candidate object is not limited in this embodiment of the present disclosure. For example, when there are many objects in the at least one first candidate object, the object aggregation interface may display these first candidate objects in a rolling manner, so that some objects in these first candidate objects can be directly displayed in the object aggregation interface, and some other objects in the object aggregation interface are displayed in a hidden manner, so as to subsequently update objects displayed in the object aggregation interface by means of some operations triggered by the user in the object aggregation interface, for example, an operation of sliding upward/downward.

In addition, the displaying manner of the foregoing "object aggregation interface" on the foregoing live streaming video page is not limited in this embodiment of the present disclosure. For example, a related or any future displaying manner that can be used when displaying one interface on another page may be used for implementation. For another example, this may be implemented in a manner of a right-pull page shown in Fig. 4.

Based on the related content of the foregoing "object aggregation interface", it can be learned that, for a client used by a particular user, when the client is displaying the live streaming video page (for example, the page 200 shown in Fig. 2), and the first live streaming video is being displayed on the live streaming video page, after the client receives the first operation (for example, the gesture of sliding leftward shown by the dashed line 202 in Fig. 3 or the tap operation triggered for the control 201 in Fig. 2) triggered for the live streaming video page, the object aggregation interface having a live streaming video recommendation function is displayed on the live streaming video page, and the first candidate objects corresponding to some of the first candidate live streaming videos are displayed on the object aggregation interface, so that the user can achieve the object of arbitrarily switching between these first candidate live streaming videos by means of these first candidate objects, so as to better meet the user's experience on viewing the live streaming video. For ease of understanding, the following provides description with reference to the following Case 1 and Case 2.

Case 1: When the at least one first candidate object corresponding to the first category description information is displayed on the foregoing object aggregation interface, the process shown in the following step 1 may be triggered on the object aggregation interface.

Step 1: Switching the first live streaming video on the live streaming video page to the first candidate live streaming video corresponding to the first candidate object in response to the trigger operation for the first target object in the at least one first candidate object.

The first target object is the first candidate object selected by the user. In addition, the first target object is not limited in this embodiment of the present disclosure. For example, when the foregoing "at least one first candidate object" includes at least the first candidate object corresponding to the live streaming video 1 shown in Fig. 4, the first candidate object corresponding to the live streaming video 2 shown in Fig. 4, the first candidate object corresponding to the live streaming video 3 shown in Fig. 4, and the first candidate object corresponding to the live streaming video 4 shown in Fig. 4, if the user triggers the tap operation for the area 402 in Fig. 4, the first target object is the first candidate object corresponding to the live streaming video 3, for example, the object consisting of "cover picture of the live streaming video 3" , "title of the live streaming video 3" and "@the user nickname of the live streaming video 3" in Fig. 4.

In addition, the foregoing first target object is not limited in this embodiment of the present disclosure. For example, when the first live streaming video is being displayed on the foregoing live streaming video page, if the second target object corresponding to the first live streaming video does not exist among the foregoing "at least one first candidate object", the first target object may be any object in the "at least one first candidate object". However, if the second target object corresponding to the first live streaming video exists among the foregoing "at least one first candidate object", the first target object may be any other object other than the second target object among the "at least one first candidate object".

In addition, an implementation of the foregoing first target object is not limited in this embodiment of the present disclosure. For example, in a possible implementation, when the first target object is the foregoing n^{th} first candidate object, and the n^{th} first candidate object corresponds to the n^{th} first candidate live streaming video, the first target object may include at least one selected from the group consisting of live streaming room image data corresponding to the n^{th} first candidate live streaming video, and live streaming room description information corresponding to the n^{th} first candidate live streaming video. It should be noted that, for related content of the "live streaming room image data" and related content of the "live streaming room description information", it may refer to the foregoing text.

In addition, the trigger operation for the first target object in the foregoing "trigger operation for the first target object in the at least one first candidate object" is not limited in this embodiment of the present disclosure, and for example, may be a tap operation. For another example, when at least image data (for example, the cover picture shown in the area 402 in Fig. 4) is displayed on the first target object, the "trigger operation for the first target object in the at least one first candidate object" may be specifically a trigger operation for image data displayed on the first target object (for example, a tap operation triggered on the cover picture shown in the area 402 in Fig. 4).

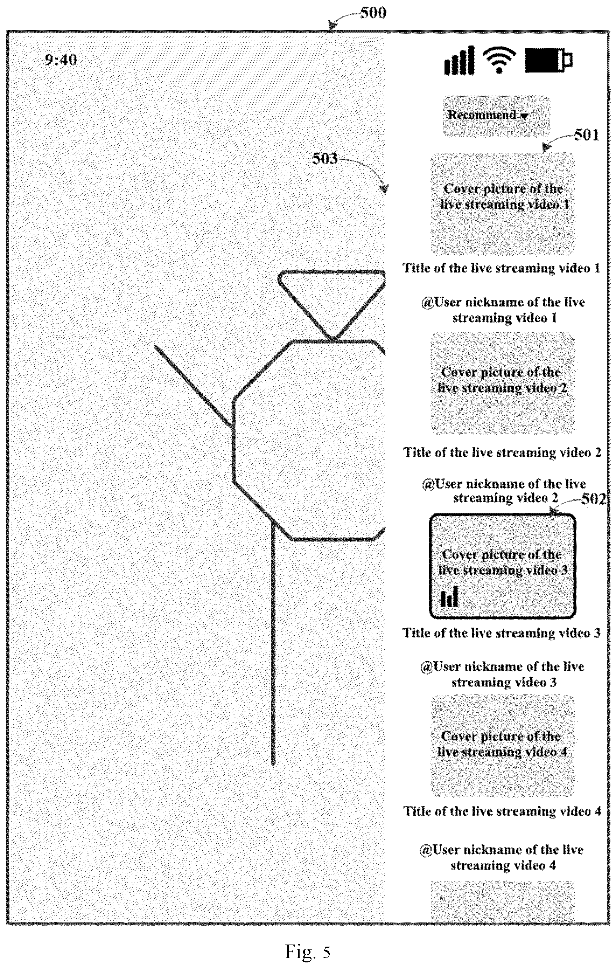

Based on the related content of the foregoing step 1, it can be learned that, for a client used by a particular user, when the client is displaying a live streaming video page (for example, a page 400 shown in Fig. 4), the first live streaming video and the object aggregation interface (for example, an interface 404 shown in Fig. 4) are being displayed on the live streaming video page, and the object aggregation interface includes first candidate objects corresponding to N first candidate live streaming videos, after the client receives a trigger operation for the first candidate object corresponding to the n^{th} first candidate live streaming video (for example, a tap operation for the cover picture displayed on the first candidate object corresponding to the n^{th} first candidate live streaming video), it may be determined that the user wants to view the n^{th} first candidate live streaming video, for example, the live streaming video 3 corresponding to the area 402 in Fig. 4. Therefore, the client may directly switch the live streaming video displayed on the live streaming video page from the first live streaming videos to the n^{th} first candidate live streaming video while keeping the object aggregation interface in a display state, so that the user can not only view the n^{th} first candidate live streaming video (for example, the live streaming video 3 corresponding to the area 502 in Fig. 5) from the live streaming video page (for example, a page 500 shown in Fig. 5), but also switch to another live streaming video by means of the object aggregation interface for viewing. In this way, an operation process of arbitrarily switching and viewing among the plurality of live streaming videos by the user can be effectively simplified, and the user experience is improved. Wherein, n is a positive integer, n≤N, and N is a positive integer.

Actually, the user needs to learn, from the foregoing object aggregation interface, which live streaming video is being displayed by the foregoing live streaming video page. Therefore, to meet the user's requirement, this embodiment of the present disclosure further provides a possible implementation of the foregoing object aggregation interface. In this implementation, when the object aggregation interface includes at least one first candidate object, an object among these first candidate objects and that corresponds to the live streaming video and is in the displaying state may be controlled to be in a highlighted state (for example, the display state shown in the area 401 in Fig. 4). However, other objects among these first candidate objects that correspond to the live streaming video and is not in the display state, are in a non-highlighted state (for example, the display state shown in the area 402 in Fig. 4).

Based on this, this embodiment of the present disclosure further provides a possible implementation of the foregoing step 1. In this implementation, when the first live streaming video and the foregoing object aggregation interface are being displayed on the foregoing live streaming video page, and the object aggregation interface includes at least one first candidate object, the step 1 may be specifically: in response to the trigger operation for the first target object in the at least one first candidate object, switching the first live streaming video on the live streaming video page to the first candidate live streaming video corresponding to the first target object, and adjusting an object display state of the first target object on the object aggregation interface.

The foregoing "object display state of the first target object" is used to describe a presented state of the first target object upon being displayed on the foregoing object aggregation interface, for example, whether a thick line box is added to image data in the first target object, or the like.

In addition, the foregoing "adjusting an object display state of the first target object on the object aggregation interface" is not limited in this embodiment of the present disclosure. For example, when an object display state of the first target object before adjustment is a standard display state (for example, the display state shown in the area 402 in Fig. 4), the "adjusting an object display state of the first target object on the object aggregation interface" may be specifically: switching the object display state of the first target object on the object aggregation interface from the standard display state to a highlighted display state, for example, the display state shown in the area 502 in Fig. 5.

The highlighted display state is a display state preset for an object corresponding to a particular live streaming video (for example, the foregoing first target object), so that the highlighted display state can indicate that the live streaming video corresponding to the object in the highlighted display state is being played and displayed by the foregoing live streaming video page.

In addition, an implementation of the highlighted display state is not limited in this embodiment of the present disclosure. For example, a related or any future method that can highlight display information may be used. For another example, when image data (for example, the image data shown in the area 502 in Fig. 5) is displayed on the foregoing first target object, the highlighted display state (for example, the image display state shown in the area 502 in Fig. 5) may be specifically: adding a thick line at an edge position of the image data, so that the image data is enclosed by the thick line box (for example, the thick line box shown in the area 502 in Fig. 5); further, adding a preset live streaming video playing mark at the lower left corner of the image data, for example, the mark shown in the lower left corner in the area 502 in Fig. 5.

In addition, the standard display state is another display state preset for an object corresponding to a particular live streaming video (for example, the foregoing first target object), so that the standard display state can indicate that the live streaming video corresponding to the object in the standard display state is not in the play and display state.

In addition, the standard display state is opposite to the foregoing highlighted display state. In addition, the standard display state is not limited in this embodiment of the present disclosure. For example, when the highlighted display state is the image display state shown in the area 502 in Fig. 5, the standard display state may be an image display state shown in the area 402 in Fig. 4 (in other words, there is no thick line box, and there is neither a live streaming video playing mark).

Based on the content of the foregoing five paragraphs, it can be learned that, for a client used by a particular user, when the client is displaying a live streaming video page (for example, the page 400 shown in Fig. 4), the first live streaming video and the object aggregation interface (for example, the interface 404 shown in Fig. 4) are being displayed on the live streaming video page, and the object aggregation interface includes first candidate objects corresponding to N first candidate live streaming videos, after the client receives a trigger operation for the first candidate object corresponding to the n^{th} first candidate live streaming video (for example, a tap operation triggered for the area 402 in Fig. 4), it may be determined that the user wants to view the n^{th} first candidate live streaming video (for example, the live streaming video 3 corresponding to the area 402 in Fig. 4). Therefore, the user may directly switch the live streaming video displayed on the live streaming video page from the first live streaming video to the n^{th} first candidate live streaming video while keeping the object aggregation interface in a display state, and switch, on the object aggregation interface, the object display state of the first target object from the standard display state (for example, the display state shown in the area 402 in Fig. 4) to the highlighted display state (for example, the display state shown in the area 502 in Fig. 5), so that the user can quickly learn, from the object aggregation interface, that the first target object is being in the play and display state on the live streaming video page, thereby facilitating improving user experience.

Actually, in some cases, for example, when an object corresponding to a live streaming video being displayed by the live streaming video page is displayed in the foregoing object aggregation interface, to better improve user experience, not only the object display state, after switching, of the object corresponding to the live streaming video on the object aggregation interface needs to be adjusted, but also the object display state, before switching, of the object corresponding to the live streaming video on the object aggregation interface needs to be adjusted. Based on this, this embodiment of the present disclosure further provides another possible implementation of the foregoing step 1. In this implementation, when the first live streaming video and the foregoing object aggregation interface are being displayed on the foregoing live streaming video page, the object aggregation interface includes at least one first candidate object, and the at least one first candidate object includes the second target object corresponding to the first live streaming video, the step 1 may be specifically: if the object display state of the second target object is different from the object display state of another object other than the second target object among the at least one first candidate object, in response to the trigger operation for the first target object in the at least one first candidate object, switching, on the live streaming video page, the first live streaming video to the first candidate live streaming video corresponding to the first target object, and adjusting, on the object aggregation interface, the object display state of the first target object and the object display state of the second target object, so that the object display state of the first target object after adjustment is different from the object display state of the second target object after adjustment, and the object display state of the first target object after adjustment is also different from the object display state of other objects in the at least one first candidate object except the first and the second target objects. For ease of understanding, the following provides description with reference to examples.

As an example, when the first live streaming video (for example, the live streaming video 1 shown in Fig. 4) and the foregoing object aggregation interface are being displayed on the foregoing live streaming video page, the object aggregation interface includes at least one first candidate object. The at least one first candidate object includes the first target object (for example, the object corresponding to the live streaming video 3 shown in Fig. 4) and the second target object corresponding to the first live streaming video. The object display state of the second target object before adjustment is the highlighted display state (for example, the display state shown in the area 401 in Fig. 4), and the object display state of the first target object before adjustment is the standard display state (for example, the display state shown in the area 402 in Fig. 4). In addition, when the object display state of the other objects in the foregoing at least one first candidate object except the first and second target objects is the standard display state, the foregoing step 1 may be specifically: in response to the trigger operation for the first target object in the at least one first candidate object, switching, on the live streaming video page, the first live streaming video to the first candidate live streaming video corresponding to the first target object, switching, on the object aggregation interface, the object display state of the first target object from the standard display state to the highlighted display state (for example, the display state shown in the area 502 in Fig. 5), and switching, on the object aggregation interface, the object display state of the second target object from the highlighted display state to the standard display state (for example, the display state shown in the area 501 in Fig. 5), so that the user can learn, from the object aggregation interface, that the first candidate live streaming video corresponding to the first target object is being played on the live streaming video page.

Based on the content of the foregoing two paragraphs, it can be learned that, for a client used by a particular user, when the client is displaying the live streaming video page (for example, the page 400 shown in Fig. 4), the object aggregation interface (for example, the interface 404 shown in Fig. 4) is being displayed on the live streaming video page, and first candidate objects corresponding to N first candidate live streaming videos are displayed on the object aggregation interface, if the n^{th} first candidate live streaming video is not the foregoing first live streaming video, after the client receives the trigger operation (for example, the tap operation triggered for the area 402 in Fig. 4) for the first candidate object corresponding to the n^{th} first candidate live streaming video, it may be determined that the user wants to view the n^{th} first candidate live streaming video (for example, the live streaming video 3 corresponding to the area 402 in Fig. 4). Therefore, the client may directly switch the live streaming video displayed on the live streaming video page from the first live streaming video to the n^{th} first candidate live streaming video, and switch, on the object aggregation interface, the first candidate object corresponding to the first live streaming video from the highlighted display state to the standard display state, and switch the first candidate object corresponding to the n^{th} first candidate live streaming video from the standard display state to the highlighted display state. In this way, the object aggregation interface can indicate that the n^{th} first candidate live streaming video is in the play and display state, but the first live streaming video is not in the play and display state, so that the display process for the first live streaming video can be directly switched to the display process for the n^{th} first candidate live streaming video (for example, the display process for the live streaming video 1 shown in Fig. 4 is switched to the display process for the live streaming video 3 shown in Fig. 5), so as to ensure that the user better learns, from the updated live streaming video page and object aggregation interface, related content of the n^{th} first candidate live streaming video, thereby facilitating improving the user experience.

Case 2: Actually, in some cases, for example, when an object corresponding to a live streaming video being displayed by the live streaming video page is displayed in the foregoing object aggregation interface, if the first live streaming video is being displayed on the live streaming video page, the user may not only switch from the first live streaming video to another live streaming video for viewing by means of the object aggregation interface, but also re-switch back to the foregoing first live streaming video by means of the object aggregation interface. Based on this, this embodiment of the present disclosure further provides a possible implementation of the foregoing display method. In this implementation, when the display method includes at least the foregoing step 1, the display method may further include the following step 2. Execution time of step 2 is later than that of the step 1.

Step 2: When the first candidate live streaming video corresponding to the foregoing first target object is being played on the foregoing live streaming video page, and the at least one first candidate object displayed in the foregoing object aggregation interface includes the second candidate object corresponding to the first live streaming video, switching the first candidate live streaming video corresponding to the first target object to the first live streaming video on the live streaming video page in response to the trigger operation for the second target object in the at least one first candidate object.

It should be noted that, an implementation of step 2 is similar to the implementation of the foregoing step 1. For brevity, details are not described herein again.

Based on related content of the foregoing step 2, it can be learned that, for a client used by a particular user, when the client is displaying the live streaming video page (for example, the page 500 shown in Fig. 5,) the first candidate live streaming video corresponding to the foregoing first target object is being played on the live streaming video page, and the object aggregation interface (for example, the interface 503 shown in Fig. 5) being displayed on the live streaming video page includes the first candidate object corresponding to the at least one first candidate live streaming video, after receiving the trigger operation (for example, the tap operation triggered for the area 501 in Fig. 5) for the second target object among these first candidate objects, the first candidate live streaming video corresponding to the first target object is switched back to the first live streaming video on the live streaming video page, so as to achieve the object of randomly switching between the first live streaming video and other live streaming videos by means of the object aggregation interface, so as to better meet of the live streaming video viewing experience of the user.

Actually, in some cases, the user not only wants to view some live streaming videos recommended for the foregoing first live streaming video, but also may want to view a live streaming video in another category. Therefore, to better meet the live streaming video viewing requirement of the user, this embodiment of the present disclosure further provides a possible implementation of the foregoing object aggregation interface. In this implementation, the object aggregation interface may not only display the first candidate object corresponding to the foregoing at least one first candidate live streaming video, but also display the first control (for example, the control 403 shown in Fig. 4), so that the content displayed on the first control indicates a category to which a live streaming video that is recommended for displaying by means of the foregoing object aggregation interface belongs. For ease of understanding, the following provides description with reference to examples.

For example, when the first candidate object corresponding to the at least one first candidate live streaming video is displayed on the foregoing object aggregation interface, and the video category description information of each first candidate live streaming video includes the first category description information (for example, the character string "recommend" shown in Fig. 4), the first category description information may be displayed on the foregoing first control, so that the content displayed on the first control can indicate categories to which these first candidate live streaming videos that are recommended for displaying by means of the object aggregation interface belong.

In addition, a position of the foregoing first control on the object aggregation interface is not limited in this embodiment of the present disclosure. For example, the first control may be displayed in a third area of the object aggregation interface. The third area is a top area of the object aggregation interface. In other words, in a possible implementation, a distance between the upper boundary line of the area in which the first control is located on the object aggregation interface and the upper boundary line of the object aggregation interface does not exceed the first distance threshold, so that the user can notice the first control from the object aggregation interface more easily. The first distance threshold may be preset, for example, the first distance threshold is a quite small value (for example, the first distance threshold may be 0).

In addition, to better improve user experience, this embodiment of the present disclosure further provides another possible implementation of the foregoing first control. In this implementation, the first control not only can display a category to which the foregoing first candidate live streaming video belongs, but also can display other categories of information to the user based on user operations (as shown in the following S3).

Based on the related content of the foregoing S2, it can be learned that, for a client used by a particular user, when the client is displaying the live streaming video page (for example, the page 200 shown in Fig. 2), and the first live streaming video is being displayed on the live streaming video page, after the client receives the first operation (for example, the gesture of sliding leftward shown by the dashed line 202 in Fig. 3 or the tap operation triggered for the control 201 in Fig. 2) triggered for the live streaming video page, the object aggregation interface having a live streaming video recommendation function is displayed on the live streaming video page, and first candidate objects corresponding to some first candidate live streaming videos, and the first control are displayed on the object aggregation interface, so that the user can not only achieve the object of arbitrarily switching between these first candidate live streaming videos by means of these first candidate objects, but also achieve the object of viewing a live streaming video in the other categories by means of the first control, so as to better meet the live streaming video viewing experience of the user.

In an embodiment, the object aggregation interface is displayed on the live streaming video page in a sidebar manner, an entry corresponding to the object aggregation interface may be displayed on the live streaming video page (the live streaming room page), and the sidebar corresponding to the object aggregation interface is displayed on the live streaming video page in response to a trigger operation for the entry. The sidebar may be disposed on the side close to the entry, so as to meet the expectation of the user, facilitate user operations, and improve user experience.

In an embodiment, an unfold operation for the sidebar is received, and the object aggregation interface is displayed in full screen, that is, the object aggregation page is displayed in the full screen display manner, to display the third candidate object. The number of the third candidate objects is greater than that of the first/second candidate objects. Alternatively, an unfold operation for the sidebar is received, and the object aggregation interface is displayed in full screen, that is, the object aggregation page is displayed in the full screen display manner, to display the fourth category description information. The number of pieces of the fourth category description information is greater than that of the second/third category description information. This facilitates the user in efficiently filtering information, to obtain content of interest.

S3: Displaying at least one piece of second category description information on the object aggregation interface in response to a trigger operation for the first control.

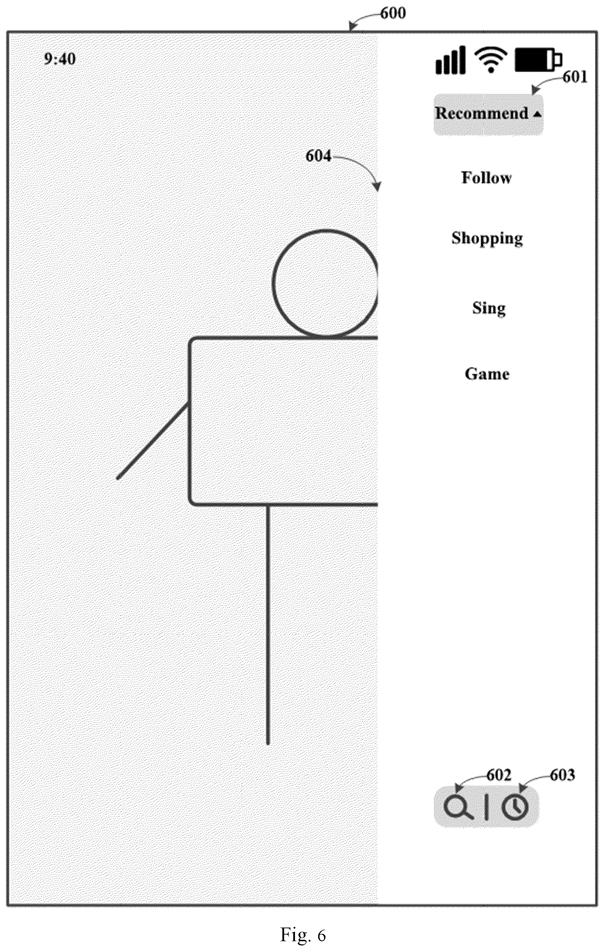

The foregoing "at least one piece of second category description information" is used to describe other categories other than the category described by the foregoing first category description information. In addition, the "at least one piece of second category description information" is not limited in this embodiment of the present disclosure. For example, when the first category description information is the character string "recommend" shown in Fig. 4, the "at least one piece of second category description information" may include character strings such as "follow", "shopping", "sing", and "game" shown in Fig. 6.

In addition, the foregoing "at least one piece of second category description information" is not limited in this embodiment of the present disclosure, and may be, for example, preset based on an application scenario.

In addition, a display manner of the foregoing "at least one piece of second category description information" is not limited in this embodiment of the present disclosure. For example, the display manner may be specifically vertically displaying the at least one piece of second category description information on the object aggregation interface, to ensure that the second category description information can better adapt to a size requirement of the object aggregation interface (for example, a requirement of a small width, a large height, or the like).

In addition, an implementation of the foregoing S3 is not limited in this embodiment of the present disclosure. For example, a related or any future category information display manner may be used. For another embodiment, to better improve the spatial use efficiency of the foregoing object aggregation interface, this embodiment of the present disclosure further provides a possible implementation of the foregoing S3. In this implementation, when the at least one first candidate object is being displayed on the foregoing object aggregation interface, S3 may be specifically: in response to the trigger operation (for example, the tap operation) for the first control in the foregoing object aggregation interface, switching the at least one first candidate object on the object aggregation interface to the at least one piece of second category description information, so that the second category description information and these first candidate objects share a particular space in the object aggregation interface, thereby effectively improving the spatial use efficiency of the object aggregation interface.

Actually, to better improve user experience, this embodiment of the present disclosure further provides another possible implementation of the foregoing first control. In this implementation, not only the first category description information (for example, the character string "recommend" shown in Fig. 4) is displayed on the first control, but also a preset identifier (for example, a triangle symbol displayed on the control 403 in Fig. 4) may be displayed on the first control, so that preset identifiers in different display states can indicate different meanings, and this may be specifically: when the first candidate object corresponding to the foregoing at least one first candidate live streaming video is being displayed on the foregoing object aggregation interface, the preset identifier may be displayed based on a first symbol display state (for example, a state of a triangle displayed on the control 403 in Fig. 4), so that the first symbol display state can indicate that other category description information can be viewed by tapping the first control. However, when the foregoing at least one piece of second category description information is being displayed on the foregoing object aggregation interface, the preset identifier may be displayed based on a second symbol display state (for example, a state of a triangle displayed on the control 601 in Fig. 6), so that the second symbol display state can indicate that displaying of other category description information can be canceled by tapping the first control. The first symbol display state is opposite to the second symbol display state. For example, if the first symbol display state is an inverted triangle state (for example, the state of the triangle displayed on the control 403 in Fig. 4), the second symbol display state may be a regular triangle state (for example, the state of the triangle displayed on the control 601 in Fig. 6).

Based on the content of the foregoing paragraph, it can be learned that, to better improve user experience, this embodiment of the present disclosure further provides another possible implementation of the foregoing S3. In this implementation, when the first candidate object corresponding to the foregoing at least one first candidate live streaming video is being displayed on the foregoing object aggregation interface (for example, the interface 404 shown in Fig. 4), and the first control deployed on the object aggregation interface is showing the first category description information and the preset identifier in the first symbol display state, the S3 may be specifically: in response to the trigger operation for the first control in the object aggregation interface, displaying at least one piece of second category description information on the object aggregation interface, and switching the preset identifier on the first control from the first symbol display state to the second symbol display state, so that the user can learn, from the second symbol display state, that displaying of the second category description information can be canceled by tapping the first control.

Actually, to better meet some other requirements of the user (for example, requirements such as searching for a particular live streaming video, viewing some historical live streaming videos that have been viewed, or the like), this embodiment of the present disclosure further provides another possible implementation of the foregoing object aggregation interface. In this implementation, when the at least one piece of second category description information is being displayed on the object aggregation interface (for example, the interface 604 shown in Fig. 6), the object aggregation interface may further include a search control (for example, the control 602 shown in Fig. 6) and/or a history browse control (for example, the control 603 shown in Fig. 6).

Based on the content of the foregoing paragraph, it can be learned that, to better improve user experience, this embodiment of the present disclosure further provides another possible implementation of the foregoing S3. In this implementation, when the foregoing object aggregation interface (for example, the interface 404 shown in Fig. 4) is displaying the first candidate object corresponding to the foregoing at least one first candidate live streaming video, and the first control deployed on the object aggregation interface is showing the first category description information, the S3 may be specifically: in response to the trigger operation for the first control, displaying at least one piece of second category description information in the first area of the object aggregation interface, and displaying a search control and/or a history browse control in the second area of the object aggregation interface. There is no overlapping area between the first area and the second area.

In addition, the foregoing first area and second area are not limited in this embodiment of the present disclosure. For example, in a possible implementation, the first area is a middle area (for example, an area used to display character strings such as "follow", "shopping", "sing", "game", or the like, in Fig. 6) of the foregoing object aggregation interface, and the second area is a bottom area (for example, an area used to display the control 602 and the control 603 in Fig. 6) of the object aggregation interface.

The foregoing "search control" is used to trigger a search procedure for a particular live streaming video. In addition, a working principle of the search control is not limited in this embodiment of the present disclosure. For example, the working principle of the search control may be: when the client is displaying the object aggregation interface, and the object aggregation interface is displaying the search control, after the client receives the trigger operation (for example, the tap operation) for the search control, an information search page is displayed, so that a user of the client can perform search processing for a particular live streaming video by means of the information search page. The information search page is used to receive a search word input by the user, and perform search processing based on the search word. In addition, the information search page is not limited in this embodiment of the present disclosure. For example, the information search page may be implemented by using a related or any future page having an information search function.

The foregoing "history browse control" is used to trigger a display procedure for live streaming videos that have been viewed by the user. For example, when the client is displaying the object aggregation interface, and the object aggregation interface is displaying the history browse control, after the client receives the trigger operation (for example, the tap operation) for the history browse control, a history browse display page is displayed, so that the user of the client can view, by means of the history browse display page, live streaming videos that have been browsed by the user. The history browse display page is used to display at least one live streaming video that has been viewed by the user. In addition, the history browse display page is not limited in this embodiment of the present disclosure. For example, the history browse display page may be implemented by using a related or any future page having a history browse information display function.

Based on related content of the foregoing S3, it can be learned that, for a client used by a particular user, when the client is displaying a live streaming video page (for example, the page 400 shown in Fig. 4), the object aggregation interface (for example, the interface 404 shown in Fig. 4) is being displayed on the live streaming video page, and the first control (for example, the control 401 shown in Fig. 4) is displayed on the object aggregation interface, after receiving the trigger operation (for example, the tap operation) for the first control, the client displays at least one piece of second category description information on the object aggregation interface, so that the object aggregation interface can provide live streaming video recommendation functions in a plurality of types for the user, to better meet the live streaming viewing experience of the user.

Based on related content of the foregoing S1 to S3, it can be learned that, for the display method provided in this embodiment of the present disclosure, when the client is displaying the live streaming video page, and the first live streaming video is being displayed on the live streaming video page, after the client receives the first operation (for example, sliding leftward) triggered for the live streaming video page, the object aggregation interface is displayed on the live streaming video page. In addition, the first candidate objects corresponding to the first category description information are displayed on the object aggregation interface, so that these first candidate objects are used to describe some first candidate live streaming videos. Then, after receiving the trigger operation for the first control on the object aggregation interface, the client displays the at least one piece of the second category description information on the object aggregation interface, so that the user can view a live streaming video under another category by means of the second category description information, so as to achieve the object of viewing live streaming videos under a plurality of categories by means of the object aggregation interface, to better meet the live streaming viewing requirement of the user, thereby further effectively improving live streaming video viewing experience of the user.

Actually, to better improve user experience, this embodiment of the present disclosure further provides a possible implementation of the foregoing display method. In this implementation, the display method may further include the following S4. Execution time of S4 is later than that of the foregoing S3.

S4: Displaying at least one second candidate object corresponding to target category description information on the object aggregation interface in response to a trigger operation for the target category description information in the at least one piece of second category description information, where the second candidate object is used to describe a second candidate live streaming video.

The target category description information is the second category description information selected by the user. For example, when the foregoing object aggregation interface is the interface 604 shown in Fig. 6, and the at least one piece of second category description information displayed on the object aggregation interface includes character strings such as "follow", "shopping", "sing", "game", or the like as shown in Fig. 6, after the client receives the trigger operation (for example, the tap operation) for the character string "shopping", it may be determined that the user of the client wants to view a live streaming video under the shopping category, and therefore, the character string "shopping" may be considered as the target category description information.

In addition, an implementation of the foregoing "trigger operation for the target category description information in the at least one piece of second category description information" is not limited in this embodiment of the present disclosure, and the trigger operation, for example, may be a tap operation.

The foregoing "at least one second candidate object corresponding to the target category description information" is used to describe a live streaming video that belongs to a category (for example, the category of shopping) described by the target category description information, and the second candidate object corresponds to the second candidate live streaming video, so that the second candidate object is used to describe the second candidate live streaming video. The second candidate live streaming video is a live streaming video under a category (for example, the category of shopping) described by the target category description information. In other words, the video category description information of the second candidate live streaming video includes the target category description information. It should be noted that, an implementation of the foregoing "second candidate object" is similar to the implementation of the foregoing "first candidate object". For brevity, details are not described herein again.

Actually, to better provide user experience, this embodiment of the present disclosure further provides a possible implementation of the foregoing S4. In this implementation, when the first live streaming video is displayed on the foregoing live streaming video page, S4 may be specifically: in response to the trigger operation for the target category description information in the foregoing at least one piece of second category description information, switching the at least one piece of second category description information displayed on the object aggregation interface to the at least one second candidate object corresponding to the target category description information, and switching the first live streaming video played in the live streaming video page to the second live streaming video corresponding to the target category description information.

The foregoing "second live streaming video corresponding to the target category description information" is a live streaming video having the target category description information. In addition, the "second live streaming video corresponding to the target category description information" is not limited in this embodiment of the present disclosure. For example, the second live streaming video corresponding to the target category description information may be a second candidate live streaming video that meets a preset condition and that is in the second candidate live streaming videos that correspond to the foregoing at least one second candidate live streaming video. For example, when the second candidate objects corresponding to these second candidate live streaming videos are displayed in the third arrangement order on the object aggregation interface, the "second live streaming video corresponding to the target category description information" may be the second candidate live streaming video corresponding to the first one in the third arrangement order. In other words, the second candidate object corresponding to the second live streaming video is the first one in the third arrangement order.

In addition, a display manner of the foregoing "at least one second candidate object" on the object aggregation interface is not limited in this embodiment of the present disclosure. For example, when the "at least one second candidate object" includes the foregoing second live streaming video, the at least one second candidate object may be displayed in the object aggregation interface in the first arrangement order, and the second candidate object corresponding to the second live streaming video corresponds to the first one in the first arrangement order. The first arrangement order indicates an order in which these second candidate objects are displayed on the object aggregation interface.

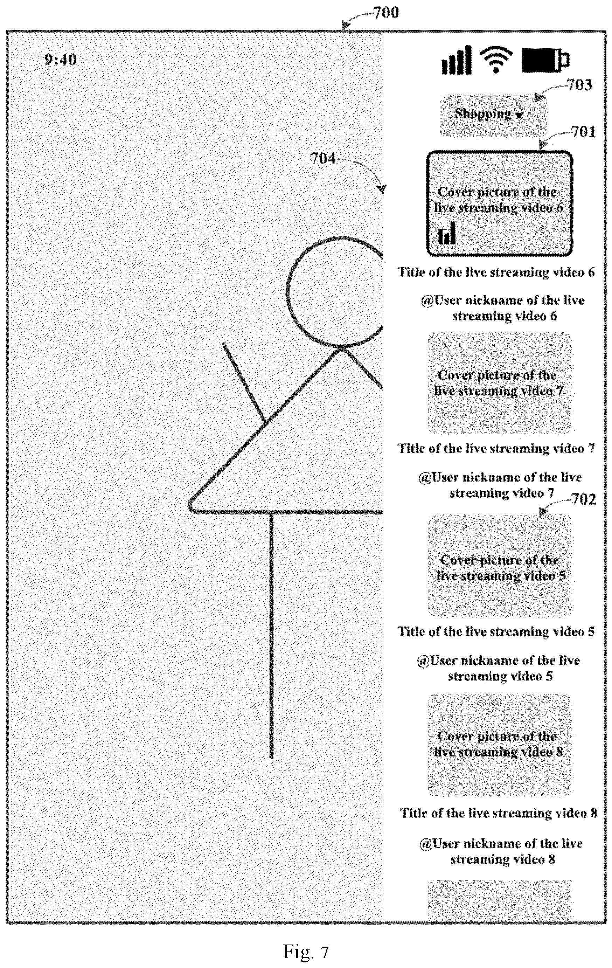

In addition, a display manner of the foregoing at least one second candidate object on the foregoing object aggregation interface is not limited in this embodiment of the present disclosure. For example, these second candidate objects may be vertically displayed on the object aggregation interface (for example, a vertical display manner shown in Fig. 7), to ensure that these second candidate objects can better adapt to a size requirement (for example, a requirement of a small width, a large height, or the like) of the object aggregation interface.

Based on the content of the foregoing three paragraphs, it can be learned that, for a client used by a particular user, when the client is displaying the live streaming video page (for example, the page 600 shown in Fig. 6), the first live streaming video and the object aggregation interface (for example, the interface 604 shown in Fig. 6) are being displayed on the live streaming video page, and the object aggregation interface is displaying the at least one piece of second category description information (for example, "follow", "shopping", "sing", "game", or the like as shown in Fig. 6), after the client receives the trigger operation for the target category description information in the second category description information, for example, the tap operation triggered for "shopping" shown in Fig. 6, not only the display content on the object aggregation interface can be switched from the at least one piece of second category description information to the second candidate object corresponding to the foregoing at least one second candidate live streaming video (for example, the second candidate object displayed on the interface 704 in Fig. 7), but also the first live streaming video played on the live streaming video page can be switched to the second live streaming video corresponding to the target category description information (for example, the live streaming video played on the page 700 in Fig. 7), so that it can be ensured that the user can immediately see a live streaming video with the target category description information, so as to simplify an operation of viewing, by the user, the live streaming video under the target category description information, thereby further effectively improving user experience. In addition, the second candidate object corresponding to the second live streaming video is displayed in a top area of the object aggregation interface, so that the user can learn, from the object aggregation interface, some content related to the second live streaming video, which can better improve user experience.

Actually, to better improve user experience, this embodiment of the present disclosure further provides a possible implementation of the foregoing S4, and the implementation may be specifically: in response to the trigger operation for the target category description information in the foregoing at least one piece of second category description information, switching the at least one piece of second category description information displayed on the object aggregation interface to the at least one second candidate object corresponding to the target category description information, and switching the first category description information displayed on the first control in the object aggregation interface to the target category description information, so that the display content on the first control after switching can accurately indicate that these second candidate objects belong to the target category description information, to effectively avoid user confusion, thereby improving user experience.

Based on the related content of the foregoing S4, it can be learned that, in some application scenarios, for a client used by a particular user, when the client is displaying the live streaming video page (for example, the page 600 shown in Fig. 6), the first live streaming video and the object aggregation interface (for example, the interface 604 shown in Fig. 6) are being displayed on the live streaming video page, and the object aggregation interface is displaying the at least one piece of second category description information (for example, "follow", "shopping", "sing", "game", or the like as shown in Fig. 6), after the client receives the trigger operation for the target category description information in the second category description information, for example, the tap operation triggered for "shopping" shown in Fig. 6, the live streaming video played on the live streaming video page can be switched from the first live streaming video to the second live streaming video corresponding to the target category description information (for example, the live steaming video played on the page 700 in Fig. 7), the display content on the object aggregation interface is switched from the at least one piece of second category description information to the second candidate object corresponding to the foregoing at least one second candidate live streaming video (for example, the second candidate object displayed on the interface 704 in Fig. 7), and the display content on the first control in the object aggregation interface is switched from the first category description information to the target category description information (for example, the character string "shopping" displayed on the control 703 in Fig. 7), so as to achieve the object of quickly switching to other category recommendation channels, thereby facilitating improving live streaming video viewing experience of the user.

Actually, to better improve user experience, this embodiment of the present disclosure further provides a possible implementation of the foregoing display method. In this implementation, the method may further include the following S5. Execution time of S5 is later than that of the foregoing step "switching the first category description information displayed on the first control in the object aggregation interface to the target category description information".

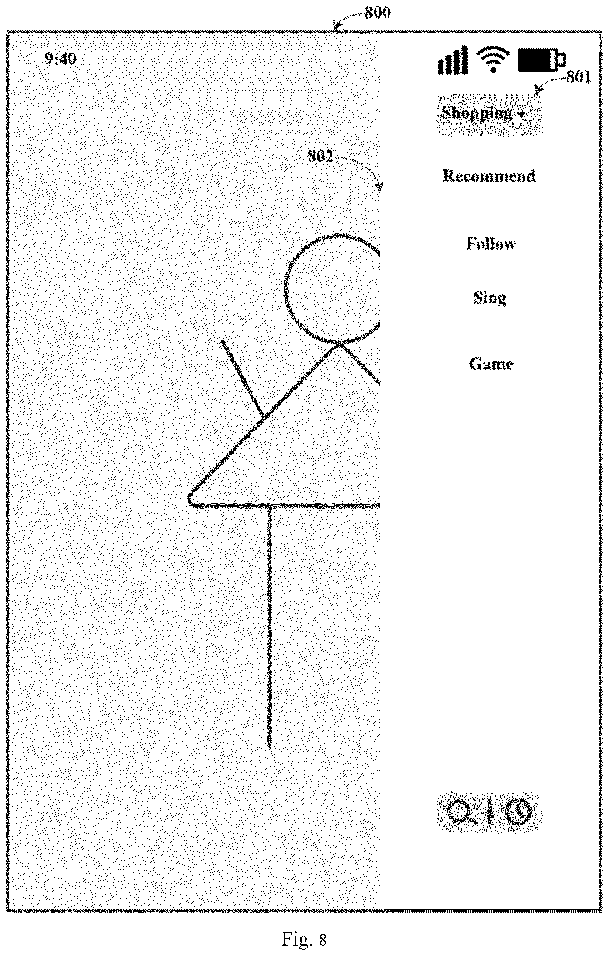

S5: When the foregoing object aggregation interface includes the at least one second candidate object corresponding to the foregoing target category description information, and the first control in the object aggregation interface is showing the target category description information, in response to the trigger operation for the first control, displaying at least one piece of third category description information (for example, "recommend", "follow", "sing", "game", or the like as shown in Fig. 8) on the object aggregation interface.

The foregoing "at least one piece of third category description information" is used to describe other categories other than the category described by the foregoing target category description information. In view of this, the at least one piece of third category description information may include the foregoing first category description information (for example, "recommend" shown in Fig. 8) and other information in the foregoing at least one piece of second category description information except the target category description information, for example, "follow", "sing", "game", or the like as shown in Fig. 8.

In addition, for the display manner of the foregoing "at least one piece of third category description information" on the object aggregation interface in this embodiment of the present disclosure, for example, if the display content on the foregoing first control is obtained by switching from the first category description information to the target category description information, the display manner of the "at least one piece of third category description information" on the object aggregation interface may be specifically: displaying the at least one piece of third category description information on the object aggregation interface in a second arrangement order (for example, the category display order shown in the interface 802 in Fig. 8); and the first category description information in the at least one piece of third category description information corresponds to the first one in the second arrangement order.

In addition, in a possible implementation, the foregoing "at least one piece of third category description information" may be vertically displayed on the foregoing object aggregation interface (for example, a vertical display manner shown on the interface 802 in Fig. 8).

Based on related content of the foregoing S5, it can be learned that, for the plurality of pieces of category description information provided in the foregoing object aggregation interface, after the display content on the first control in the object aggregation interface is switched from the first category description information to the target category description information, the first category description information may also be determined as other category information corresponding to the target category description information. In addition, a display position occupied by the first category description information on the object aggregation interface is close to the display position of the first control on the object aggregation interface, so that the user can subsequently quickly learn, from display positions of the plurality of pieces of category description information provided on the object aggregation interface, the description information that has viewed according to the positions thereof, to facilitate improving user experience.

Actually, to better improve user experience, this embodiment of the present disclosure further provides another possible implementation of the foregoing first control. In this implementation, the first control not only can display other category information to the user based on a user operation, but also can cancel, based on the user operation, a display process for the other category information. Based on this, this embodiment of the present disclosure further provides another possible implementation of the foregoing display method. In this implementation, when the display method includes at least the foregoing S3, the display method may further include the following S6. Execution time of S6 is later than that of the foregoing S3.

S6: When the foregoing object aggregation interface is displaying the at least one piece of second category description information, and the first control in the object aggregation interface is showing the first category description information, in response to the trigger operation for the first control, switching, on the object aggregation interface, the at least one piece of second category description information to the at least one first candidate object corresponding to the first category description information.

The foregoing "trigger operation for the first control in the object aggregation interface" is not limited in this embodiment of the present disclosure, and for example, may be specifically a tap operation.

Based on related content of the foregoing S6, it can be learned that, in some application scenarios (for example, a scenario in which the foregoing at least one piece of second category description information shares partial space in the foregoing object aggregation interface with the at least one first candidate object), for a client used by a particular user, when the client is displaying the live streaming video page (for example, the page 600 shown in Fig. 6), the object aggregation interface (for example, the interface 604 shown in Fig. 6) is being displayed on the live streaming video page, the first control in the object aggregation interface is displaying the first category description information (for example, the character string "recommend" shown in the control 601 in Fig. 6), and the object aggregation interface is displaying the at least one piece of second category description information (for example, "focus", "shopping", "sing", "game", or the like as shown in Fig. 6), after the client receives the trigger operation (for example, the tap operation) for the first control, the display content on the object aggregation interface is switched from the at least one piece of second category description information to the at least one candidate object (for example, the object shown in the interface 404 in Fig. 4) corresponding to the first category description information, so that the plurality of pieces of category description information can be folded, and the first candidate objects corresponding to these first candidate live streaming videos continue to be displayed, thereby enabling the user to view related information of these first candidate live streaming videos by means of the object aggregation interface.

Actually, in some cases (for example, in a case in which the user finds a preferred live streaming video or the user does not want to continue to search for other live streaming videos), the user may directly close the foregoing object aggregation interface. Based on this, this embodiment of the present disclosure further provides another possible implementation of the foregoing display method. In this implementation, when the display method includes at least the foregoing S2, the display method may further include the following S7. Execution time of S7 is later than that of the foregoing S2.

S7: In response to the second operation, cancelling the displaying of the object aggregation interface on the live streaming video page.

The second operation is used to trigger a close procedure for the foregoing object aggregation interface. In addition, the second operation is not limited in this embodiment of the present disclosure, for example, may be a related or any future operation that can perform a close processing for an interface, for example, an operation such as tapping the control "×" that appears on the object aggregation interface.

For another example, in some cases, a close procedure for the object aggregation interface may be triggered by means of a particular gesture. Based on this, this embodiment of the present disclosure further provides another possible implementation of the foregoing second operation. The implementation may be specifically an operation of sliding in a second direction on the foregoing live streaming video page or the foregoing object aggregation interface. The second direction may be preset, for example, may be an inverse direction of the direction shown by the dashed line 202 in Fig. 3 (that is, an operation of sliding rightward).

In addition, an implementation of the step "canceling the displaying of the object aggregation interface on the live streaming video page" in the foregoing S7 is not limited in this embodiment of the present disclosure. For ease of understanding, the following provides description with reference to three examples.

Example 1: When the first live streaming video (for example, the live streaming video 1 played on the page 400 shown in Fig. 4) is being played on the foregoing live streaming video page, and the object aggregation interface (for example, the interface 404 shown in Fig. 4) is further displayed on the live streaming video page, the foregoing S7 may be specifically: in response to the second operation (for example, an operation of sliding rightward), canceling the displaying of the object aggregation interface on the live streaming video page, to obtain the page 200 shown in Fig. 2, thereby switching back to the page 200 shown in Fig. 2 from the page 400 shown in Fig. 4.

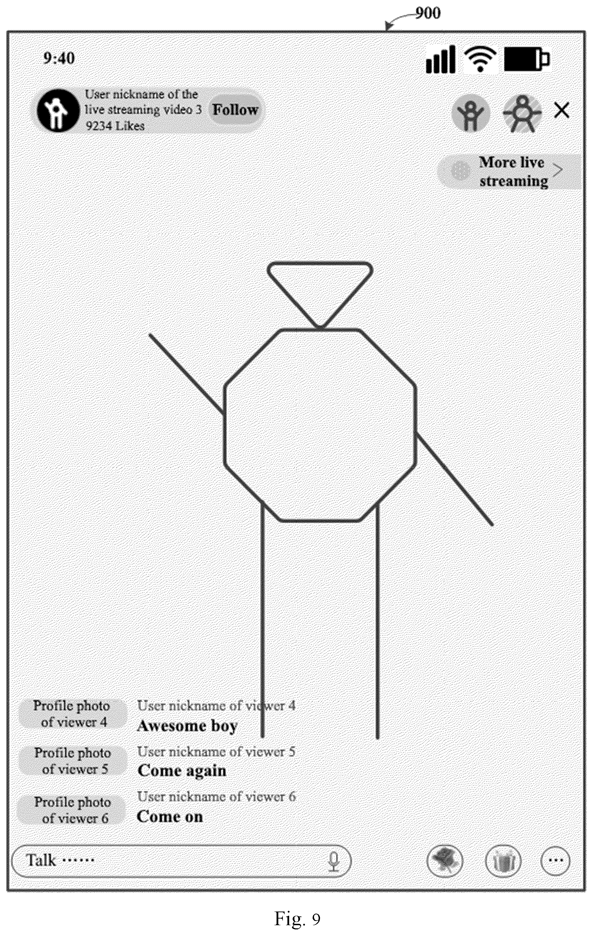

Example 2: When the foregoing "first candidate live streaming video (for example, the live streaming video 3 played on the page 500 shown in Fig. 5) corresponding to the first target object is being played on the foregoing live streaming video page, and the object aggregation interface (for example, the interface 503 shown in Fig. 5) is further displayed on the live streaming video page, the foregoing S7 may be specifically: in response to the second operation (for example, an operation of sliding rightward), canceling the displaying of the object aggregation interface on the live streaming video page, to obtain the page 900 shown in Fig. 9, thereby switching to the page 900 shown in Fig. 9 from the page 500 shown in Fig. 5.

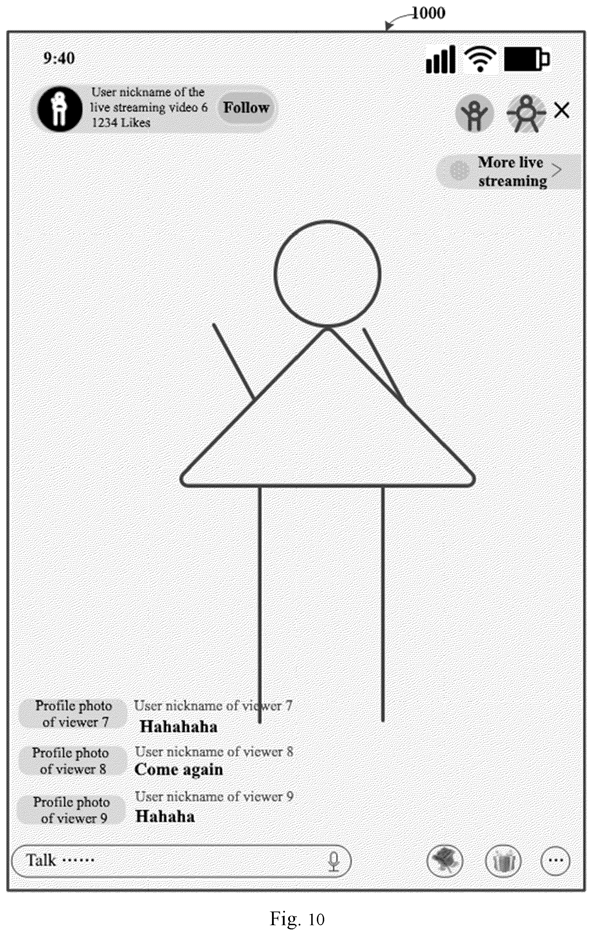

Example 3: When the foregoing "second live streaming video (for example, the live streaming video 6 played on the page 700 shown in Fig. 7) corresponding to the target category description information" is being played on the foregoing live streaming video page, and the object aggregation interface (for example, the interface 704 shown in Fig. 7) is further displayed on the live streaming video page, the foregoing S7 may be specifically: in response to the second operation (for example, an operation of sliding rightward), canceling the displaying of the object aggregation interface on the live streaming video page, to obtain the page 1000 shown in Fig. 10, thereby switching to the page 1000 shown in Fig. 10 from the page 700 shown in Fig. 7.

Based on the related content of the foregoing S7, it can be learned that, for a client used by a particular user, when the client is displaying the live streaming video page, and a particular live streaming video (for example, the live streaming video 1 played on the page 400 shown in Fig. 4, the live streaming video 3 played on the page 500 shown in Fig. 5, or the live streaming video 6 played on the page 700 shown in Fig. 7) is being displayed on the live streaming video page, after the client receives the second operation (for example, an operation of sliding rightward), displaying of the object aggregation interface may be canceled on the live streaming video page, so that the object aggregation interface no longer interferes with the display process of the live streaming video on the live streaming video page, so that the user can better watch the live streaming video, thereby facilitating improving live streaming video watching experience of the user.

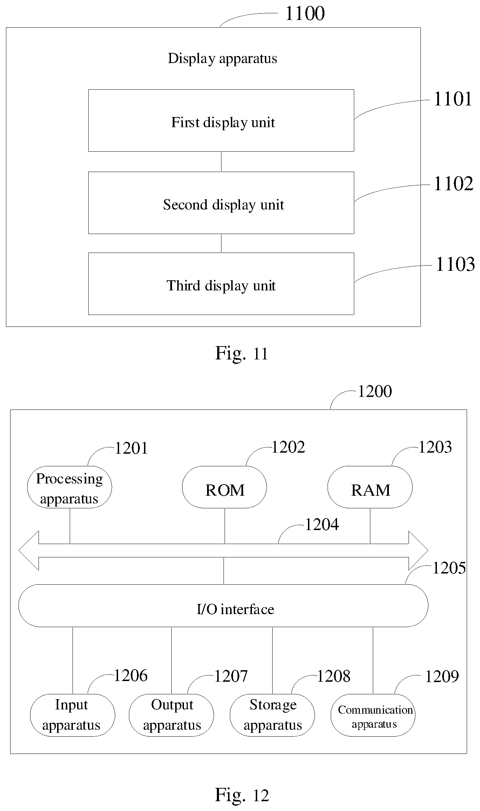

Based on the display method provided in embodiments of the present disclosure, an embodiment of the present disclosure further provides a display apparatus. The following explains and describes the display apparatus with reference to Fig. 11. Fig. 11 is a schematic structural diagram of a display apparatus according to an embodiment of the present disclosure. It should be noted that, for technical details of the display apparatus provided in this embodiment of the present disclosure, please refer to related content of the foregoing display method.

As shown in Fig. 11, a display apparatus 1100 provided in this embodiment of the present disclosure includes:
a first display unit 1101, configured to display a live streaming video page;
a second display unit 1102, configured to display an object aggregation interface on the live streaming video page in response to a first operation triggered for the live streaming video page; wherein at least one first candidate object corresponding to first category description information is displayed on the object aggregation interface, the first candidate object is used to describe a first candidate live streaming video, a first control is further displayed on the object aggregation interface, and the first category description information is displayed on the first control; and
a third display unit 1103, configured to display at least one piece of second category description information on the object aggregation interface in response to a trigger operation for the first control.

In a possible implementation, the display apparatus 1100 further includes:
a fourth display unit, configured to display at least one second candidate object corresponding to target category description information on the object aggregation interface, in response to a trigger operation for the target category description information in the at least one piece of second category description information, after the at least one piece of second category description information is displayed on the object aggregation interface, wherein the second candidate object is used to describe a second candidate live streaming video.

In a possible implementation, a first live streaming video is displayed on the live streaming video page.

The fourth display unit is specifically configured to: switch the at least one piece of second category description information displayed on the object aggregation interface to the at least one second candidate object corresponding to the target category description information, in response to the trigger operation for the target category description information in the at least one piece of second category description information, and switch the first live streaming video played in the live streaming video page to a second live streaming video corresponding to the target category description information.

In a possible implementation, the second candidate live streaming video corresponding to the at least one second candidate object includes the second live streaming video; and the at least one second candidate object is displayed in a first arrangement order in the object aggregation interface, wherein the second candidate object corresponding to the second live streaming video corresponds to the first one in the first arrangement order.

In a possible implementation, the fourth display unit is specifically configured to: switch the at least one piece of second category description information displayed on the object aggregation interface to the at least one second candidate object corresponding to the target category description information, in response to the trigger operation for the target category description information in the at least one piece of second category description information, and switch the first category description information displayed on the first control in the object aggregation interface to the target category description information.

In a possible implementation, the display apparatus 1100 further includes:
a fifth display unit, configured to: display the first category description information, and other information in the at least one piece of second category description information except the target category description information, on the object aggregation interface, in response to the trigger operation for the first control, after the first category description information displayed on the first control in the object aggregation interface is switched to the target category description information.

In a possible implementation, the first category description information, and the other information in the at least one piece of second category description information except the target category description information are displayed on the object aggregation interface in a second arrangement order, wherein the first category description information corresponds to the first one in the second arrangement order.

In a possible implementation, the third display unit 1103 is specifically configured to switch the at least one first candidate object on the object aggregation interface to the at least one piece of second category description information.

In a possible implementation, the display apparatus 1100 further includes:
an information switching unit, configured to switch the at least one piece of second category description information on the object aggregation interface to the at least one first candidate object, in response to the trigger operation for the first control, after the at least one first candidate object is switched to the at least one piece of second category description information on the object aggregation interface.

In a possible implementation, the third display unit 1103 is configured to: display the at least one piece of second category description information in a first area of the object aggregation interface in response to the trigger operation for the first control, and display a search control and/or a history browse control in a second area of the object aggregation interface.

In a possible implementation, one of the following is included:
vertically displaying the at least one piece of second category description information on the object aggregation interface;
vertically displaying the at least one first candidate object on the object aggregation interface; and
vertically displaying the at least one second candidate object on the object aggregation interface.

Based on related content of the foregoing display apparatus 1100, it can be learned that, for the display apparatus 1100 provided in this embodiment of the present disclosure, when the display apparatus 1100 is displaying the live streaming video page, and the first live streaming video is being displayed on the live streaming video page, after the display apparatus 1100 receives the first operation (for example, sliding leftward) triggered for the live streaming video page, the object aggregation interface is displayed on the live streaming video page. In addition, the first candidate object corresponding to the first category description information is displayed on the object aggregation interface, so that these first candidate objects are used to describe some first candidate live streaming videos. Then, after receiving the trigger operation for the first control on the object aggregation interface, the display apparatus 1100 displays the at least one piece of the second category description information on the object aggregation interface, so that the user can view a live streaming video under another category by means of the second category description information, so as to achieve the object of viewing live streaming videos under a plurality of categories by means of the object aggregation interface, to better meet the live streaming viewing requirement of the user, thereby further effectively improving live streaming video viewing experience of the user.

In addition, an embodiment of the present disclosure further provides an electronic device. The device includes a processor and a memory. The memory is configured to store an instruction or a computer program. The processor is configured to execute the instruction or the computer program in the memory, so that the electronic device performs any implementation of the display method provided in embodiments of the present disclosure.

Referring to Fig. 12, Fig. 12 illustrates a schematic structural diagram of an electronic device 1200 suitable for implementing the embodiments of the present disclosure. The terminal devices in embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 12 is merely an example, and should not pose any limitation to the functions and the range of use of the embodiments of the present disclosure.

As illustrated in Fig. 12, the electronic device 1200 may include a processing apparatus 1201 (e.g., a central processing unit, a graphics processing unit, etc.), which can perform various suitable actions and processing according to a program stored in a read-only memory (ROM) 1202 or a program loaded from a storage apparatus 1208 into a random-access memory (RAM) 1203. The RAM 1203 further stores various programs and data required for operations of the electronic device 1200. The processing apparatus 1201, the ROM 1202, and the RAM 1203 are interconnected by means of a bus 1204. An input/output (I/O) interface 1205 is also connected to the bus 1204.

Usually, the following apparatus may be connected to the I/O interface 1205: an input apparatus 1206 including, for example, a touch screen, a touch pad, a keyboard, a mouse, a camera, a microphone, an accelerometer, a gyroscope, or the like; an output apparatus 1207 including, for example, a liquid crystal display (LCD), a loudspeaker, a vibrator, or the like; a storage apparatus 1208 including, for example, a magnetic tape, a hard disk, or the like; and a communication apparatus 1209. The communication apparatus 1209 may allow the electronic device 1200 to be in wireless or wired communication with other devices to exchange data. While Fig. 12 illustrates the electronic device 1200 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a computer-readable medium. The computer program includes program codes for performing the methods shown in the flowcharts. In such embodiments, the computer program may be downloaded online through the communication apparatus 1209 and installed, or may be installed from the storage apparatus 1208, or may be installed from the ROM 1202. When the computer program is executed by the processing apparatus 901, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to execute the above methods in the embodiments.

The computer program codes for performing the operations of the present disclosure may be written in one or more programming languages or a combination thereof. The above-mentioned programming languages include object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of the unit/module does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

It should be noted that in the present specification, the embodiments are described in a progressive manner, and each embodiment focuses on differences from other embodiments. For the same and similar parts of the embodiments, reference may be made to each other. For a system or apparatus disclosed in the embodiments, since it corresponds to the method disclosed in the embodiments, the description is relatively simple, and for related parts, reference may be made to the description of the method section.

It should be understood that in the present disclosure, "at least one (item)" means one or more, and "a plurality of" means two or more. "And/or" describes an association relationship between associated objects and represents that three relationships may exist. For example, "A and/or B" may represent the following three cases: only A exists, only B exists, and both A and B exist, where A and B may be singular or plural. The character "/" generally indicates that the associated objects before and after are an "or" relationship. "At least one of the following items (at least one of )" or a similar expression thereof means any combination of these items, including a single item (singluar) or any combination of a plurality of items (plural). For example, at least one of a, b, or c may represent: a, b, c, "a and b", "a and c", "b and c", or "a, b, and c", where a, b, and c may be singular or plural.

It should also be noted that in this document, relational terms such as first and second are merely used to distinguish one entity or operation from another entity or operation, and do not necessarily require or imply any such actual relationship or order between these entities or operations. Moreover, the terms "include", "comprise", or any other variant thereof are intended to cover a non-exclusive inclusion, so that a process, method, product, or apparatus that includes a list of elements not only includes those elements but also includes other elements not explicitly listed, or further includes elements inherent to such process, method, product, or apparatus. Without more restrictions, an element defined by a sentence "include a/an..." does not exclude the existence of another identical element in the process, method, product, or apparatus that includes the element.

The steps of a method or algorithm described in connection with the embodiments disclosed herein may be implemented directly by hardware, a software module executed by a processor, or a combination thereof. The software module may be placed in a random access memory (RAM), a memory, a read-only memory (ROM), an electrically programmable ROM, an electrically erasable programmable ROM, a register, a hard disk, a removable disk, a CD-ROM, or any other form of storage medium well known in the art.

The foregoing descriptions of the disclosed embodiments enable those skilled in the art to implement or use the present disclosure. Various modifications to these embodiments are obvious to those skilled in the art, and the general principles defined herein may be implemented in other embodiments without departing from the spirit or scope of the present disclosure. Therefore, the present disclosure is not limited to the embodiments shown herein, but is to comply with the widest scope consistent with the principles and novel features disclosed herein.

## Claims

1. A display method, comprising:
displaying a live streaming video page;
displaying an object aggregation interface on the live streaming video page in response to a first operation triggered for the live streaming video page, wherein at least one first candidate object corresponding to first category description information is displayed on the object aggregation interface, the first candidate object is used to describe a first candidate live streaming video, a first control is further displayed on the object aggregation interface, and the first category description information is displayed on the first control; and
displaying at least one piece of second category description information on the object aggregation interface in response to a trigger operation for the first control.

2. The method according to claim 1, wherein after the displaying at least one piece of second category description information on the object aggregation interface, the method further comprises:
displaying at least one second candidate object corresponding to target category description information on the object aggregation interface in response to a trigger operation for the target category description information in the at least one piece of second category description information, wherein the second candidate object is used to describe a second candidate live streaming video.

3. The method according to claim 2, wherein a first live streaming video is displayed on the live streaming video page; and
the displaying at least one second candidate object corresponding to target category description information on the object aggregation interface in response to a trigger operation for the target category description information in the at least one piece of second category description information comprises:
switching the at least one piece of second category description information displayed on the object aggregation interface to the at least one second candidate object corresponding to the target category description information in response to the trigger operation for the target category description information in the at least one piece of second category description information, and switching the first live streaming video played in the live streaming video page to a second live streaming video corresponding to the target category description information.

4. The method according to claim 3, wherein the second candidate live streaming video corresponding to the at least one second candidate object comprises the second live streaming video; and
the at least one second candidate object is displayed in a first arrangement order on the object aggregation interface, the second candidate object corresponding to the second live streaming video corresponds to the first one in the first arrangement order.

5. The method according to claim 2, wherein the displaying at least one second candidate object corresponding to target category description information on the object aggregation interface in response to a trigger operation for the target category description information in the at least one piece of second category description information comprises:
switching the at least one piece of second category description information displayed on the object aggregation interface to the at least one second candidate object corresponding to the target category description information in response to the trigger operation for the target category description information in the at least one piece of second category description information, and switching the first category description information displayed on the first control in the object aggregation interface to the target category description information.

6. The method according to claim 5, wherein after the switching the first category description information displayed on the first control in the object aggregation interface to the target category description information, the method further comprises:
displaying the first category description information, and other information in the at least one piece of second category description information except the target category description information on the object aggregation interface in response to the trigger operation for the first control.

7. The method according to claim 6, wherein the first category description information, and the other information in the at least one piece of second category description information except the target category description information are displayed on the object aggregation interface in a second arrangement order, and the first category description information corresponds to the first one in the second arrangement order.

8. The method according to claim 1, wherein the displaying at least one piece of second category description information on the object aggregation interface comprises:
switching the at least one first candidate object on the object aggregation interface to the at least one piece of second category description information; and
after the switching the at least one first candidate object on the object aggregation interface to the at least one piece of second category description information, the method further comprises:
switching the at least one piece of second category description information on the object aggregation interface to the at least one first candidate object in response to the trigger operation for the first control.

9. The method according to claim 1, wherein the displaying at least one piece of second category description information on the object aggregation interface in response to a trigger operation for the first control comprises:
displaying the at least one piece of second category description information in a first area of the object aggregation interface in response to the trigger operation for the first control, and displaying a search control and/or a history browse control in a second area of the object aggregation interface.

10. The method according to claim 2, comprising at least one of the following:
vertically displaying the at least one piece of second category description information on the object aggregation interface;
vertically displaying the at least one first candidate object on the object aggregation interface; and
vertically displaying the at least one second candidate object on the object aggregation interface.

11. A display apparatus, comprising:
a first display unit, configured to display a live streaming video page;
a second display unit, configured to display an object aggregation interface on the live streaming video page in response to a first operation triggered for the live streaming video page, wherein at least one first candidate object corresponding to first category description information is displayed on the object aggregation interface, the first candidate object is used to describe a first candidate live streaming video, a first control is further displayed on the object aggregation interface, and the first category description information is displayed on the first control; and
a third display unit, configured to display at least one piece of second category description information on the object aggregation interface in response to a trigger operation for the first control.

12. An electronic device, comprising a processor and a memory, wherein
the memory is configured to store an instruction or a computer program; and
the processor is configured to execute the instruction or the computer program in the memory, so that the electronic device performs the method according to any one of claims 1 to 10.

13. A computer-readable medium, wherein an instruction or a computer program is stored in the computer-readable medium, and when the instruction or the computer program is executed on a device, the device is enabled to perform the method according to any one of claims 1 to 10.

14. A computer program product, comprising a computer program carried on a non-transient computer-readable medium, wherein the computer program comprises a program code for performing the method according to any one of claims 1 to 10.
